# EUROPEAN PATENT SPECIFICATION

(11) **EP 3 739 915 B1**
(45) Date of publication and mention of the grant of the patent: **07.09.2022**
(21) Application number: 19174851.6
(22) Date of filing: 16.05.2019
(51) Int. Cl.: H04W 4/80, H04W 4/20, H04W 4/38, H04W 12/02

(54) **SHARING STATUS DATA OF A DEVICE**
GEMEINSAME NUTZUNG VON ZUSTANDSDATEN EINER VORRICHTUNG
PARTAGE DE DONNÉES D'ÉTAT D'UN DISPOSITIF

(43) Date of publication of application: 18.11.2020
(73) Proprietor: ABB Schweiz AG, 5400 Baden (CH)
(72) Inventor: Lempinen, Juha, 00380 Helsinki (FI); Kohvakka, Mikko, 00380 Helsinki (FI); Tanila, Teemu, 00380 Helsinki (FI)
(74) Representative: Kolster Oy Ab

(56) References cited:
- EP-A2- 3 166 340
- US-A1- 2018 349 242
- US-B2- 10 070 292

## Description

### FIELD

The present invention relates to sharing status data of an industrial automation device to wireless devices.

### BACKGROUND ART

The evolvement of communication technology, particularly wireless communication technology and end user apparatuses, has enabled versatile communication possibilities and introduction of different services. An example of such a service is a remote support for maintenance staff of machines and equipment. There are smartphone applications that allow a user of the smartphone to retrieve status information of a machine from the machine once a connection between the smartphone and the machine has been established.

US 2018/0349242 discloses solutions in which an accessory can detect changes to characteristics of the accessory, generate a broadcast notification that includes updates to the state of the characteristic and transmit the broadcast notification to a controller without the need to establish a secure session with the controller.

EP3166340 teaches that an automated power conversion device may cause wireless transmission of advertising messages, which comprise the information on the operational status of the automated power conversion device, by using a non-connected signalling mode. A terminal device locating within the listening range of the connectionless signalling mode receives the advertising message and informs the user of the terminal device on the operational status.

US 10,070,292 discusses on multiple virtual Bluetooth low energy devices utilising Bluetooth broadcast.

### BRIEF DESCRIPTION

An object of the invention is to provide a simpler mechanism to deliver status information.

According to an aspect, there is provided the subject matter of the independent claims. Embodiments are defined in the dependent claims.

One or more examples of implementations are set forth in more detail in the accompanying drawings and the description below. Other features will be apparent from the description and drawings, and from the claims.

Some aspects provide a method, a device, a system and a computer program product for providing possibility to deliver status information without establishing a connection.

### BRIEF DESCRIPTION OF THE DRAWINGS

In the following, exemplary embodiments will be described in greater detail with reference to accompanying drawings, in which
Figure 1 shows simplified architecture of a system;
Figures 2 to 6 are flow charts illustrating examples of functionalities; and
Figures 7 and 8 are block diagrams of exemplary devices.

### DETAILED DESCRIPTION OF SOME EMBODIMENTS

The following embodiments are exemplary. Although the specification may refer to "an", "one", or "some" example(s) in several locations, this does not necessarily mean that each such reference is to the same embodiment(s), or that the feature only applies to a single embodiment. Single features of different examples/embodiments may also be combined to provide other embodiments. Furthermore, words "comprising" and "including" should be understood as not limiting the described examples/embodiments to consist of only those features that have been mentioned and such examples/embodiments may contain also features/structures that have not been specifically mentioned.

The present invention is applicable to any industrial automation device that is configurable to transmit status information, and to any user apparatus configurable to receive status information, and a system comprising such devices.

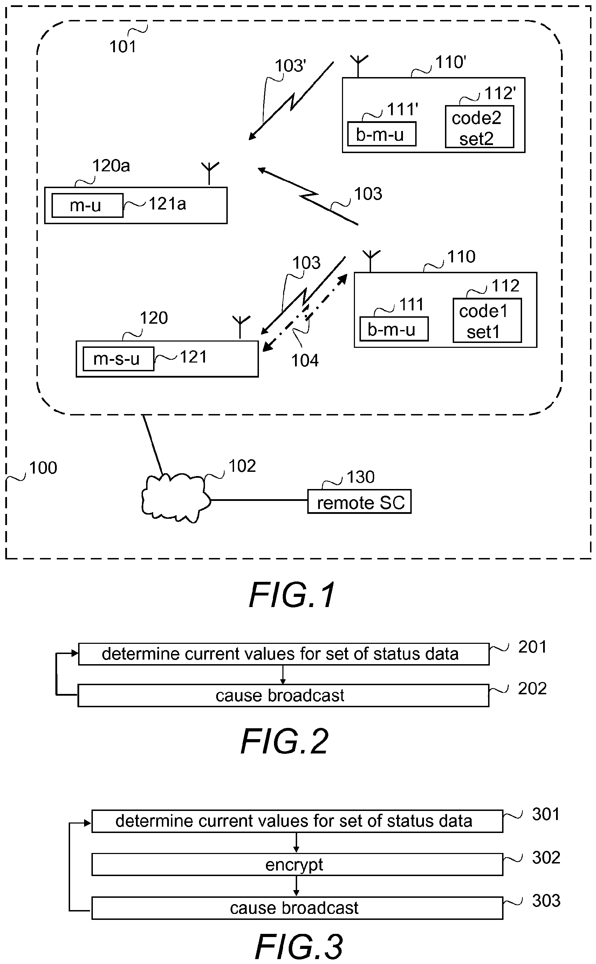

An extremely general architecture of an exemplary system 100 is illustrated in Figure 1. Figure 1 is a simplified system architecture only showing some elements, functional entities, which are logical units whose implementation may differ from what is shown, and some equipment. It is apparent to a person skilled in the art that the system comprises any number of shown elements, other equipment, and structures that are not illustrated.

In the example illustrated in Figure 1, the system 100 comprises one or more industrial sites 101 (only one illustrated in Figure 1) comprising one or more industrial automation devices 110, 110' (two are illustrated in Figure 1) at the industrial site and one or more user apparatuses 120, 120' (two are illustrated in Figure 1) that may enter the industrial site 101. Naturally the system 100 may comprise, as illustrated in Figure 1, one or more remote service centers 130, and/or local service centers (not illustrated in Figure 1), and one or more networks 102 over which one or more automation devices 110, 110' at the industrial site and/or the one or more user apparatuses 120, 120' may connect to the one or more remote service centers. However, the service center(s) and the network(s) over which to connect to the service center(s) are not described in more detail herein since the focus is in functionality at the industrial site.

The industrial automation device 110, 110', or shortly automation device, refers to electronic equipment that is used for controlling one or more industrial processes having one or more downstream devices. For example, automation devices may control the position, speed, torque and/or direction of electric motors in conveyors, grinders, winders, pumps and/or fans. An industrial automation device may control the speed and/or torque of a motor by changing the frequency, current and/or voltage of the electrical supply to the motor, for example. A non-limiting list of examples of industrial automation devices includes drives, frequency converters, AC/DC converters, DC/AC converters, DC/DC converters, programmable logic controllers, switches, motion controllers or motion drives, servo motors, soft starters, wind turbines and solar inverters. In the illustrated example of Figure 1, the automation devices 110, 110' are configured, as will be described in more detail below with Figures 2 to 5, to broadcast 103, 103' values of a preset set of status data while allowing manipulation (commission, troubleshoot, start up, change settings, etc.) of the automation device. For that purpose both of the automation devices 110, 110' comprise a broadcast-manipulation-unit (b-m-u) 111, 111', and in a memory 112,112' device-specific definitions for the preset set of status data. In implementations in which encryption is used, the memory comprises information, such as one or more secret keys, used for the encryption. Further, the memory 112, 112' usually comprises authentication information and/or information, for example a code, required to establish a connection 104 to the automation device in question. It should be appreciated that in another implementation an automation device may comprise a separate broadcast unit for which the memory 112, 112' comprises the preset set of status data, and a separate manipulation unit for manipulation of the automation device. The separate manipulation unit may comprise legacy means for manipulation in the automation device.

The preset set of status data in the memory defines what status information is broadcast. For example, the set of status data may define that status information, which is broadcast, comprises actual values of a motor speed, a torque and current, as well as notifications of faults and warnings. The set of status data may define the status information to comprise any kind of information on use, events, operation environment, lifetime status, etc. Further examples of status information include events, other results of operation monitoring, such as usage time and/or loading time (current, average, max, etc.), estimated time to a next maintenance, which component should be changed, estimation which component will fail next, a value exceeding a limit, a value being below a minimum limit, and inhibits, for example reason(s) why a device cannot start, different parameters and/or their values, such as temperature (current, average, min, max, cycles), environmental temperature, humidity, vibration, etc., just to list some examples in a non-exhaustive manner. Further, it should be appreciated that the status information of a device may comprise only one piece of information, or any amount of pieces of information. The choice what constitutes the status information may depend on devices in the device network, it may be different for different devices in the device network, and there are no restrictions; one or more pieces of information obtainable from a device may be set to be part of the status information. The set of status data may be the same in similar type of automation devices, or each automation device may have its own set of status data. The set may be preset to the automation device during manufacture of the automation device, as part of factory settings, or preset when the automation device is commissioned, and the set may be updated during manipulation or recommissioning.

The broadcast 103, 103' uses a wireless communication technology. Such communication technologies may be based on a short-range communication technology, for example, Bluetooth communication standards, and other wireless local area network technologies, such as radio frequency technologies including Wi-Fi, ZigBee, USB Bluetooth, near field communication (NFC), radio-frequency identification (RFID) and optical wireless technologies including Li-Fi and other technologies using at least one of visible light spectrum, ultraviolet and infrared radiation. The broadcast may use mesh technology, such as Bluetooth mesh or Wi-Fi mesh networking. Naturally the broadcast may use any mobile wireless technology, such LTE, 4G, 5G and beyond. Further, different automation devices 110, 110', may use different communication technology for broadcast, even when located in the same site. The broadcast 103, 103' is a connectionless communication from a device to all devices in a non-connected state (non-connected mode) within a range of the broadcast. The connectionless communication is called communication over a non-paired connection in systems, such as Bluetooth, in which a connection is established via pairing.

The connection 104 is a connection between two devices 110, 120. The connection 104 a may be a direct connection, for example a Bluetooth connection, or a connection over a local wireless network, like Wi-Fi or Li-Fi, or a wired connection using Ethernet, for example. Naturally the connection may be provided by any mobile system, such LTE, 4G, 5G and beyond. In other words, the connection 104 may use the same, or different, technology as is used for the broadcast 103, 103'. For example, broadcast may use mesh networking, while the connection is a direct connection providing smaller latency, higher data rate and better reliability, thereby taking into account different reliability and security requirements of monitoring (broadcast 103, 103') and manipulating (connection 104).

As a summary, any existing or future communication technology may be used for the broadcast 103, 103' and for the connection 104.

The user apparatus 120, 120a refers to a computing device (equipment), that may be a non-portable device or a portable device, and it may also be referred to as a user terminal or user device. Portable computing devices (apparatuses) include wireless mobile communication devices operating with or without a subscriber identification module (SIM) in hardware or in software, including, but not limited to, the following types of devices: mobile phone, smart-phone, laptop and/or touch screen computer, tablet (tablet computer), smart screen (smart display), multimedia device, and wearable devices, including augmented reality devices and virtual reality devices. In the illustrated example of Figure 1, one of the user apparatuses 120a is configured to receive broadcast comprising status information (values for status data) and to display the received status information. For that purpose the user apparatus 120a comprises a monitoring unit (m-u) 121a. In the illustrated example of Figure 1, the other one of the user apparatuses 120 is configured to receive broadcast comprising status information (values for status data), to display the received status information and to manipulate settings in the automation device 110, 110'. For that purpose the user apparatus 120 comprises a combined monitoring and setting unit (m-s-u) 121. Naturally the user apparatus 120 may comprise a separate monitoring unit and a separate setting unit. The user apparatuses 120, 120a may comprise a remote maintenance application, for example, as a mobile app, that comprises as part of the application, or as an add-in or a plug-in to the application, the monitoring unit or the monitoring and setting unit.

As is illustrated in Figure 1, a user apparatus 120a may receive broadcast 103, 103' from several automation devices within whose broadcast range the user apparatus is. Depending on settings in the user apparatus and/or implementation, status information shown to a user may comprise status information on several automation devices, for example from all automation devices wherefrom the user apparatus receives broadcast, shown at the same time to the user, or shown successively to the user, or the user may select, for example by swiping and/or tapping, the automation device/those automation devices whose status information will be displayed simultaneously, for example, when status information is received from more than one automation device. Allowing displaying status information from several automation devices at the same time facilitates system optimization, and possible fault detection, in systems containing several automation devices and several downstream devices, for example electric motors.

Figure 2 illustrates an example of a functionality of an automation device, and more precisely an example of a functionality of the broadcast unit or the broadcast and manipulation unit the automation device comprises. Depending on implementation, broadcast may be performed periodically or constantly.

Referring to Figure 2, following steps are repeated: current values in the automation device for the preset set of status data are determined in step 201, and then broadcast of the values, i.e. status information, is caused in step 202 to all devices within its broadcast range, i.e. to all devices that are near enough to receive the broadcast. The broadcast may comprise creating a frame, or any corresponding digital data transmission unit that can be broadcast, i.e. sent and received in a non-connected state, and adding the values of the status data to the frame/unit before broadcast. For example, advertising frames, by means of which the automation device informs other devices that it can be connected to, may be used for broadcast status information. Depending on implementation, mere values may be broadcast, or the broadcast may comprise, in addition to a value, a specific piece of information indicating the status data of the value, for example torque=10, or t=10. The broadcast preferably but not necessarily comprises some information by means of which broadcasting automation device, or the device whose status information is broadcast, may be identified.

Figure 3 illustrates another example of a functionality of an automation device, and more precisely another example of a functionality of the broadcast unit or the broadcast and manipulation unit the automation device comprises. The example of Figure 3 differs from the example of Figure 2 in that respect that status information is broadcast encrypted. Similar features, like creating frames or corresponding transmission units, etc. are not described in detail with Figure 3 even though they apply also for this example.

Referring to Figure 3, following steps are repeated: current values in the automation device for the preset set of status data are determined in step 301, and encrypted in step 302 using a secret key in the memory, and then broadcast of the encrypted values, i.e. encrypted status information, is caused in step 303 to all devices within its broadcast range, i.e. to all devices that are near enough to receive the broadcast. However, only devices that are configured to decrypt the encrypted status information and have a proper secret key can actually use the status information. The secret key may be a shared secret used in a symmetric key algorithm, such as Bluetooth Security Level 2 AES-CMAC encryption (Advanced Encryption Standard - Cipher-based Message Authentication Code encryption) used for unpaired connections, for example. The secret key may also be the private key of an asymmetric key algorithm using private key-public key pairs. In other words, any known or future encryption mechanism may be used.

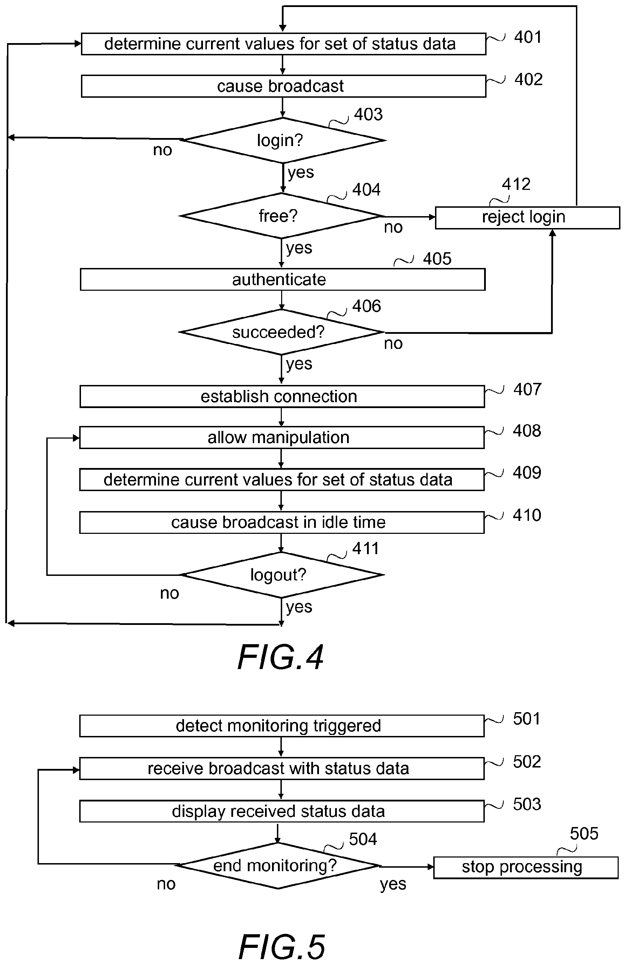

Figure 4 illustrates still a further example of a functionality of an automation device, and more precisely a further example of a functionality of the broadcast and manipulation unit the automation device comprises. In the example it is assumed that status information is broadcast without encryption, but implementing the example with encrypted status information is straightforward for one skilled in the art. Further, in the illustrated example it is assumed that one user apparatus at a time may establish a connection to the automation device for reading and writing data, i.e. for manipulation of the automation device. Such a user apparatus is usually called a master, and the automation device a slave, and the other user apparatuses, if any, which receives broadcast, i.e. monitoring user apparatuses, may be called followers.

Referring to Figure 4, current values in the automation device for the preset set of status data are determined in step 401, and then broadcast of the values, i.e. status information, is caused in step 402 to all devices within its broadcast range, i.e. to all devices that are near enough to receive the broadcast. Steps 401 and 402 correspond to steps 201 and 202 in Figure 2, and therefore they are not described in such a detail herein. At the same time it is monitored in step 403, whether a user apparatus tries to login to the automation device. If not (step 403: no), the process returns to step 401 to determine values for status information broadcast.

If a user apparatus tries to login to the automation device (step 403: yes), the automation device checks in step 404 is the automation device free to establish a connection or is there an existing connection, or a pending attempt to establish a connection. If the automation device is free (step 404: yes), the user apparatus is authenticated in step 405. Any known or future method for authentication required for connection establishment may be used. For example, in Bluetooth the authentication is part of pairing, which means that the automation device should receive a correct code from the user apparatus to allow a connection to be established. If the authentication succeeds (step 406: yes), for example a correct code is received, a connection between the automation device and the user apparatus is established in step 407. Once the connection has been established, manipulation of the automation device is allowed in step 408. In other words, the user apparatus may read and/or write data. A non-limiting list of manipulation of the automation device, or its downstream device(s), include commissioning, recommissioning, starting up, closing down, troubleshooting, setting operational values, and updating/resetting the preset set of status data. Meanwhile, when it is time to broadcast status information, current values in the automation device for the preset set of status data (current preset set of status data) are determined in step 409, and then broadcast of the values, i.e. status information, is caused in step 410 in idle time of the connection to all devices within the broadcast range of the automation device, i.e. to all devices that are near enough to receive the broadcast. Therefore all devices monitoring the automation device see also manipulation results, if the manipulation causes changes to values that are broadcast. Depending on settings in the logged in user apparatus, it may display the broadcast received, or display only the manipulation display. Broadcast takes place in idle time of the connection so that it does not collide with information sent in the connection but yet enables simultaneous broadcast of status information. When Bluetooth is used for simultaneous communication and broadcast, information transmission may be implemented by using Bluetooth mesh or scatternet principles, where upper protocol layers (Bluetooth host) control the connection (piconet connection) and broadcast in an interleaved manner in such a way that broadcast status information is sent in idle times between normal piconet communication.

At the same time it is monitored in step 411, whether the user apparatus logs out from the automation device, i.e. ends the manipulation and releases the connection. If not (step 411: no), the process continues to allow manipulation (step 408) and repeating the broadcast (steps 409 and 410).

If the user apparatus logs out from the automation device (step 411: yes), the process returns to step 401 to determine values for status information broadcast. Further, any user apparatus may then login to the automation device for manipulation.

The solution described with Figure 4 may shorten shutdown times. For example, if there are several users with their user apparatuses monitoring the automation device: all receive alerts or notifications about faults at the same time, and the user having the shortest reaction time to solve the problem, will be the one who can establish the connection and troubleshoot, and the others will see the result in real-time, and if the troubleshoot fails, someone else can try and know what has been done.

It should be appreciated that if broadcast and the connection use different technologies, that can be sent and received simultaneously, for example broadcast short-range wireless communication and the connection is a wired connection, broadcast in step 411 takes place using similar scheduling as in step 402.

Figure 5 illustrates an example of a functionality of a user apparatus at a site, and more precisely an example of a functionality of the monitoring unit, or monitoring and setting unit. In the illustrated example broadcast is not encrypted, thereby the example being a receiving party for an automation device broadcasting the status information as described above with Figures 2 and 4. Further, it is assumed that the broadcast is sent using a short-range wireless technology, to ensure that only devices that are close enough can receive it. It is a straightforward solution for one skilled in the art to implement the example when other type of wireless technologies are used.

Referring to Figure 5, it is detected in step 501 that monitoring of automation devices using a short-range wireless technology (monitoring over a short-range wireless network formed by the devices) is triggered. For example, a user of the user apparatus may have started a remote monitoring application, or corresponding application, such as remote maintenance application, or the user apparatus triggers the monitoring in response to detecting, for example based on location, that it enters the site. After the monitoring has been triggered, in the illustrated example it is assumed that broadcast with values for the specific set of status data is received in step 502 from one or more automation devices. Different example what the broadcast comprises are described above. The received status data (status information) is displayed in step 503, and receiving and displaying (including updating what is displayed) is repeated (step 504: no) until monitoring is ended. The monitoring may be ended by the user shutting down the remote application, or the user apparatus detecting that its location has changed, for example the user apparatus is not any more at the site. When monitoring is ended (step 504: yes), received broadcast, if any received, is not any more processed (step 505).

Naturally, if the user apparatus is not within the short-range of broadcast, it does not receive status data and thereby cannot display status data.

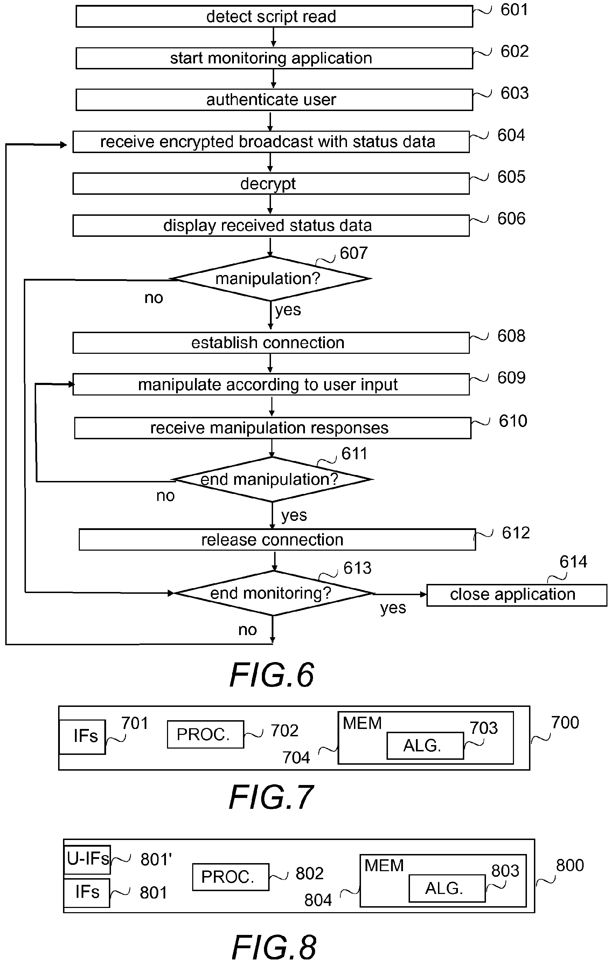

Figure 6 illustrates an example of a functionality of a user apparatus at a site, and more precisely an example of a functionality of the monitoring unit, or monitoring and setting unit. In the illustrated example broadcast is encrypted, thereby the example being a receiving party for an automation device broadcasting the status information as described above with Figure 3 or with Figure 4 updated with encryption. A further assumption relating to the example of Figure 6 is that the automation device comprises a barcode, for example a Quick Response (QR) code, or a Near Field Code (NFC) tag, or an RFID tag, or corresponding information, which need to be read to monitor the automation device, and that the user apparatus comprises means for reading the information.

Referring to Figure 6, in the illustrated example monitoring of automation devices over a wireless network is triggered in step 601 by detecting that a script is read in step 601 causing the remote application, or at least its monitoring part, to start in step 602. For example, a user of the user apparatus may have positioned the user apparatus so that the user apparatus may read the script. (It should be appreciated that reading covers also touching.) The script contains necessary instructions to start a correct remote application and begin monitoring the automation device. The script may indicate the wireless technology used for broadcast, or the remote application may be configured to monitor a preset wireless technology. With the script, information required for decrypting may also be transmitted. This provides an additional security measure, which ensures that the user apparatus, and thereby the user, is in close vicinity of the automation device, otherwise reading the script would not succeed. Being in close vicinity requires that the user has access rights to the site. In the illustrated example other security measures, for example the remote application requiring user name/password, or biometric authentication, such as fingerprint authentication, is implemented to authenticate the user in step 603. In the illustrated example it is assumed that authentication succeeds. In another implementation separate authentication is not implemented, i.e. step 603 is omitted.

In the illustrated example it is assumed that after successful starting of the remote application and successful user authentication, broadcast with encrypted values for the specific set of status data is received in step 604 from the automation device whose script was read. (If script has been read from two or more automation devices their broadcast may be received as well.) Different example what the broadcast comprises are described above. The received status data (status information) is decrypted in step 605 using, depending on an implementation a shared secret or a public key, and displayed in step 606, and receiving, decrypting and displaying (including updating what is displayed) is repeated if no manipulation (step 607: no) is triggered until (step 613: no) monitoring is ended.

If manipulation is triggered (step 607: yes), for example the user inputs a corresponding selection, a connection to the automation device is established in step 608. The connection establishment may include authentication, for example providing a pairing code, as described above with step 407. In the illustrated example it is assumed that the connection establishment succeeds, and manipulating (step 609) the automation device according to user inputs and receiving manipulation responses (step 610) is repeated (step 611: no) until the manipulation is ended. The manipulation may comprise any remote manipulation actions, examples of which are described with Figure 4. When the manipulation is ended (step 611: yes), the connection between the automation device and the user apparatus is released in step 612, and the it is checked in step 613 whether the monitoring is ended. Naturally, if the connection establishment in step 608 fails, for example the automation device rejects the request because there is a connection between the automation device and another user apparatus, the process would skip over steps 609 to 612 to step 613 to check whether the monitoring is ended.

The monitoring may be ended by the user shutting down the remote application, or the user apparatus detecting that its location has changed, for example the user apparatus is not any more at the site. When monitoring is ended (step 613: yes), the remote application, or at least its monitoring part, which was started in step 602, is closed in step 614 thereby causing that broadcast status information, if any received, is not any more processed.

Naturally, during manipulation, status information on other automation devices may be displayed.

As is evident from the above examples, status information may be received without establishing a connection, and the same information may be received simultaneously in multiple user apparatuses. This enables flexible, easy to use monitoring solutions, especially for temporary operations and/or when there is a need to share a monitoring display to multiple users at the same time.

Usually displays of automation devices are rather small in size, thereby limiting what status data can be outputted. Further, the displays of automation devices typically are not colour displays. Thanks to the broadcast, external screens may be used, thereby facilitating displaying more status data, and furthermore displaying the status data using different visualization techniques, like colours and graphs, thereby enabling faster visual detection of anomalies, and better troubleshooting. This in turn will increase productivity, since the sooner an anomaly is detected, the sooner it will be corrected. Further advantages provided by external displays include shortening commissioning time, providing tools to more effectively perform system level optimization, and facilitating maintenance operation.

The steps, related functions, and information exchanges described above by means of Figures 2 to 6 are in no absolute chronological order, and some of them may be performed simultaneously or in an order differing from the given one. Other functions can also be executed between them or within them, and other information may be sent. For example, the example of Figure 5 may be configured to contain decryption of the broadcast, if the broadcast is encrypted. For decryption, the user apparatus may have a shared secret or public key in its memory, for example. In another example, the example of Figure 6 may be configured not to decrypt the broadcast, if the broadcast is not encrypted. Some of the steps or part of the steps or one or more pieces of information can also be left out or replaced by a corresponding step, or part of the step, or one or more pieces of information. For example, instead of step 501 steps 601 and 602, or steps 601 to 603 may be performed, and vice versa.

The techniques and methods described herein may be implemented by various means so that an automation device and/or a user apparatus configured to implement at least partly on what is disclosed above with any of Figures 1 to 6, including implementing one or more functions/operations described above with an example, for example by means of any of Figures 2 to 6, comprises not only prior art means, but also means for implementing the one or more functions/operations of a corresponding functionality described with an example, for example by means of any of Figures 2 to 6, and it may comprise separate means for each separate function/operation, or means may be configured to perform two or more functions/operations. For example, one or more of the means and/or the broadcast-manipulation unit, or its sub-units, and/or the monitoring unit and/or the monitoring and setting unit, or its sub-units, described above may be implemented in hardware (one or more devices), firmware (one or more devices), software (one or more modules), or combinations thereof. For a hardware implementation, the embodiments/examples may be implemented within one or more application-specific integrated circuits (ASICs), digital signal processors (DSPs), digital signal processing devices (DSPDs), programmable logic devices (PLDs), field programmable gate arrays (FPGAs), radio-frequency circuits (RFICs), graphic processing units (GPUs), processors, controllers, micro-controllers, microprocessors, logic gates, other electronic units designed to perform the functions described herein by means of Figures 2 to 6, or a combination thereof. For firmware or software, the implementation can be carried out through modules of at least one chipset (e.g. procedures, functions, and so on) that perform the functions described herein. The software codes may be stored in a memory unit and executed by processors. The memory unit may be implemented within the processor or externally to the processor. In the latter case, the memory unit can be communicatively coupled to the processor via various means, as is known in the art. Additionally, the components of the automation device (automation apparatus) and/or the user apparatus (device/computing devices) described herein may be rearranged and/or complemented by additional components in order to facilitate the achievements of the various aspects, etc., described with regard thereto, and they are not limited to the precise configurations set forth in the given figures, as will be appreciated by one skilled in the art.

Figure 7 provides an industrial automation device (industrial automation apparatus) according to some embodiments/examples of the invention. Figure 7 illustrates an apparatus 700 configured to carry out the functions described above in connection with one or more of the automation devices and/or the broadcast and manipulation unit, or its sub-units. Each apparatus 700 may comprise one or more processing circuitry, such as at least one processor 702, and at least one memory 703, including one or more algorithms 704, such as a computer program code (software) wherein the at least one memory and the computer program code (software) are configured, with the at least one processor, to cause the apparatus to carry out any one of the exemplified functionalities of the automation device, or a unit (the broadcast and manipulation unit, or its sub-units), or a module within the automation device. The apparatus 700 may further comprise different interfaces 701, such as one or more interfaces for communication, and one or more user interfaces to user interaction.

Figure 8 provides a user apparatus (user device) according to some embodiments/examples of the invention. Figure 8 illustrates an apparatus 800 configured to carry out the functions described above in connection with the user apparatus and/or the monitoring unit and/or the monitoring and setting unit. Each apparatus 800 may comprise one or more processing circuitry, such as at least one processor 802, and at least one memory 803, including one or more algorithms 804, such as a computer program code (software) wherein the at least one memory and the computer program code (software) are configured, with the at least one processor, to cause the apparatus to carry out any one of the exemplified functionalities of the user apparatus, or the monitoring unit, or the monitoring and setting unit, or a module within the central server unit. The apparatus 800 may further comprise different interfaces 801, 801', such as one or more interfaces 801 for communication, and one or more user interfaces 801' to user interaction. The one or more user interfaces 801' may be any kind of a user interface, for example a screen, or other display, microphone and one or more loudspeakers for interaction with the user.

Referring to Figures 7 and 8, at least one of the processing circuitries in the apparatus 700, 800 is configured to provide the corresponding device/apparatus functionality or the broadcast and manipulation unit and/or the broadcast unit and/or the monitoring unit and/or the monitoring and setting unit, or any corresponding unit/sub-unit, and to carry out functionalities, described above by means of any of Figures 2 to 6, by one or more circuitries.

The memory 704, 804 or part of it may be implemented using any suitable data storage technology, such as semiconductor based memory devices, flash memory, magnetic memory devices and systems, optical memory devices and systems, fixed memory and removable memory.

The one or more interfaces 701, 801 may comprise communication interfaces comprising hardware and/or software for realizing communication connectivity according to one or more communication protocols.

As used in this application, the term 'circuitry' refers to all of the following: (a) hardware-only circuit implementations, such as implementations in only analog and/or digital circuitry, and (b) combinations of circuits and software (and/or firmware), such as (as applicable): (i) a combination of processor(s) or (ii) portions of processor(s)/software including digital signal processor(s), software, and memory(ies) that work together to cause an apparatus to perform various functions, and (c) circuits, such as a microprocessor(s) or a portion of a microprocessor(s), that require software or firmware for operation, even if the software or firmware is not physically present. This definition of 'circuitry' applies to all uses of this term in this application.

In an embodiment, the at least one processor, the memory, and the computer program code form processing means or comprises one or more computer program code portions for carrying out one or more operations of an apparatus (device, unit) according to any one of the embodiments/examples of Figures 2 to 6, or operations thereof.

Embodiments and/or examples as described may also be carried out in the form of a computer process defined by a computer program or portions thereof. Embodiments and/or examples of the methods described in connection with Fig- ures 2 to 6 may be carried out by executing at least one portion of a computer program comprising corresponding instructions. The computer program may be in source code form, object code form, or in some intermediate form, and it may be stored in some sort of carrier, which may be any entity or device capable of carrying the program. For example, the computer program may be stored on a computer program distribution medium readable by a computer or a processor. The computer program medium may be, for example but not limited to, a record medium, computer memory, read-only memory, electrical carrier signal, telecommunications signal, and software distribution package, for example. The computer program medium may be a non-transitory medium. Coding of software for carrying out the examples and/or embodiments as shown and described is well within the scope of a person of ordinary skill in the art.

Even though the invention has been described above with reference to examples according to the accompanying drawings, it is clear that the invention is not restricted thereto but can be modified in several ways within the scope of the appended claims. Therefore, all words and expressions should be interpreted broadly and they are intended to illustrate, not to restrict, the embodiment/example. It will be obvious to a person skilled in the art that, as technology advances, the inventive concept can be implemented in various ways. Further, it is clear to a person skilled in the art that the described examples may, but are not required to, be combined with other examples in various ways.

## Claims

1. A method comprising:
broadcasting (402), by an industrial automation device, using a wireless technology, status information of the industrial automation device, the status information comprising values for a preset set of status data;
establishing (407), using the wireless technology, a connection to a user apparatus for communication between the industrial automation device and the user apparatus;
continuing, while the connection exists, the broadcasting (410) the status information in an interleaved manner, wherein status information is broadcast in idle times of the communication to all devices within the broadcast range, said all
devices including the user apparatus;
receiving (408) from the user apparatus in the communication over the connection one or more updates to the preset set of status data, wherein the one or more updates are not colliding with the broadcasting happening in the idle times of the communication;
updating the preset set of status data correspondingly; and
broadcasting (410) using the updated preset set of status data.

2. A method as claimed in claim 1, wherein the wireless technology is a short-range wireless technology.

3. A method as claimed in claim 1 or 2, further comprising encrypting (302), by the industrial automation device, the status information before broadcasting.

4. A method comprising:
receiving (502), in a user apparatus within broadcast range of an industrial automation device, from the industrial automation device, a wireless broadcast comprising status data;
displaying (503), by the user apparatus, the received status data;
establishing (608), using the wireless technology, by the user apparatus, a connection to the industrial automation device for a communication between the industrial automation device and the user apparatus;
sending (609) in the communication over the connection from the user apparatus to the industrial automation device one or more updates to the preset set of status data, wherein the one or more updates are not colliding with the broadcasting happening in the idle times of the communication;
receiving (505), while the connection exists, by the user apparatus in idle times of the communication from the industrial automation device status information in wireless broadcast, wherein status information is broadcast in idle times of the communication to all devices within broadcast range of the industrial automation device.

5. A method as claimed in claim 4, further comprising, if the status data is encrypted, decrypting (605) the received status data before displaying it.

6. A method as claimed in claim 4 or 5, wherein the wireless broadcast is received over a short-range wireless technology.

7. A method as claimed in claim 4, 5 or 6, further comprising:
reading (601) by the user apparatus a script containing information for monitoring an industrial automation device;
starting (602), in response to the reading, the receiving and displaying.

8. A method as claimed in any preceding claim, wherein the industrial automation device is electronic equipment used for controlling one or more industrial processes having one or more downstream devices.

9. A computer program product comprising program instructions, which, when run on a computing apparatus, causes the computing apparatus to perform a method as claimed in any of claims 1 to 7.

10. An industrial automation device (110, 110') comprising means for implementing a method as claimed in any of claims 1 to 3.

11. An industrial automation device (110, 110') as claimed in claim 10, wherein the industrial automation device is electronic equipment for controlling one or more industrial processes having one or more downstream devices.

12. A user apparatus (120) comprising means for implementing a method as claimed in any of claims 4 to 7.

13. A system (100) comprising at least:
one or more industrial automation devices (110, 110') as claimed in claim 10 or 11; and
one or more user apparatuses (120) as claimed in claim 12.

14. A system (100) as claimed in claim 13, wherein the broadcast is using a Bluetooth technology.

## Patentansprüche

1. Verfahren, das Folgendes umfasst:
Rundsenden (402) durch eine Industrieautomatisierungsvorrichtung unter Verwendung einer Drahtlostechnologie von Statusinformationen der Industrieautomatisierungsvorrichtung, wobei die Statusinformationen Werte für im Voraus eingestellte Gruppe von Statusdaten umfassen;
Aufbauen (407) unter Verwendung der Drahtlostechnologie einer Verbindung zu einer Anwendereinrichtung zur Kommunikation zwischen der Industrieautomatisierungsvorrichtung und der Anwendereinrichtung;
Fortsetzen, während die Verbindung existiert, des Rundsendens (410) der Statusinformationen auf eine verschachtelte Weise, wobei Statusinformationen in Leerlaufzeiten der Kommunikation an alle Vorrichtungen innerhalb der Rundsendereichweite rundgesendet werden, wobei alle diese Vorrichtungen die Anwendereinrichtung enthalten;
Empfangen (408) von der Anwendereinrichtung in der Kommunikation über die Verbindung einer oder mehrerer Aktualisierungen der im Voraus eingestellten Gruppe von Statusdaten, wobei die eine oder die mehreren Aktualisierungen nicht mit dem Rundsenden, das in den Leerlaufzeiten der Kommunikation stattfindet, kollidieren;
dementsprechendes Aktualisieren der im Voraus eingestellten Gruppe von Statusdaten; und
Rundsenden (410) unter Verwendung der aktualisierten im Voraus eingestellten Gruppe von Statusdaten.

2. Verfahren nach Anspruch 1, wobei die Drahtlostechnologie eine Drahtlostechnologie mit kurzer Reichweite ist.

3. Verfahren nach Anspruch 1 oder 2, das ferner das Verschlüsseln (302) durch die Industrieautomatisierungsvorrichtung der Statusinformationen vor dem Rundsenden umfasst.

4. Verfahren, das Folgendes umfasst:
Empfangen (502) in einer Anwendereinrichtung innerhalb der Rundsendereichweite einer Industrieautomatisierungsvorrichtung von der Industrieautomatisierungsvorrichtung eines Drahtlosrundsendens, das Statusdaten umfasst;
Anzeigen (503) durch die Anwendereinrichtung der empfangenen Statusdaten;
Aufbauen (608) unter Verwendung der Drahtlostechnologie durch die Anwendereinrichtung einer Verbindung zu der Industrieautomatisierungsvorrichtung zur Kommunikation zwischen der Industrieautomatisierungsvorrichtung und der Anwendereinrichtung;
Senden (609) in der Kommunikation über die Verbindung von der Anwendereinrichtung an die Industrieautomatisierungsvorrichtung einer oder mehrerer Aktualisierungen für die im Voraus eingestellte Gruppe von Statusdaten, wobei die eine oder mehreren Aktualisierungen nicht mit dem Rundsenden, das in den Leerlaufzeiten der Kommunikation stattfindet, kollidieren;
Empfangen (505), während die Verbindung existiert, durch die Anwendereinrichtung in Leerlaufzeiten der Kommunikation von der Industrieautomatisierungsvorrichtung von Statusinformationen im Drahtlosrundsenden, wobei die Statusinformationen in Leerlaufzeiten der Kommunikation an alle Vorrichtungen innerhalb des Rundsendereichweite der Industrieautomatisierungsvorrichtung rundgesendet werden.

5. Verfahren nach Anspruch 4, das, falls die Statusdaten verschlüsselt sind, ferner das Entschlüsseln (605) der empfangenen Statusdaten, bevor sie angezeigt werden, umfasst.

6. Verfahren nach Anspruch 4 oder 5, wobei das Drahtlosrundsenden über eine Drahtlostechnologie mit kurzer Reichweite empfangen wird.

7. Verfahren nach Anspruch 4, 5 oder 6, das ferner Folgendes umfasst:
Lesen (601) durch die Anwendereinrichtung eines Skripts, das Informationen zur Überwachung einer Industrieautomatisierungsvorrichtung beinhaltet;
Starten (602) in Reaktion auf das Lesen des Empfangens und des Anzeigens.

8. Verfahren nach einem der vorhergehenden Ansprüche, wobei die Industrieautomatisierungsvorrichtung eine elektronische Ausrüstung ist, die zum Steuern eines oder mehrerer industrieller Prozesse, die die eine oder mehrere nachgeschaltete Vorrichtungen aufweisen, verwendet wird.

9. Computerprogrammprodukt, das Programmanweisungen umfasst, die dann, wenn sie auf einer Computereinrichtung ablaufen, die Computereinrichtung veranlassen, ein Verfahren nach einem der Ansprüche 1 bis 7 auszuführen.

10. Industrieautomatisierungsvorrichtung (110, 110'), die Mittel zum Implementieren eines Verfahren nach einem der Ansprüche 1 bis 3 umfasst.

11. Industrieautomatisierungsvorrichtung (110, 110') nach Anspruch 10, wobei die Industrieautomatisierungsvorrichtung eine elektronische Ausrüstung zum Steuern eines oder mehrerer industriellen Prozesse, die eine oder mehrere nachgeschaltete Vorrichtungen besitzen, ist.

12. Anwendereinrichtung (120), die Mittel zum Implementieren eines Verfahrens nach einem der Ansprüche 4 bis 7 umfasst.

13. System (100), das Folgendes umfasst:
eine oder mehrere Industrieautomatisierungsvorrichtungen (110, 110') nach Anspruch 10 oder 11; und/oder
eine oder mehrere Anwendereinrichtungen (120) nach Anspruch 12.

14. System (100) nach Anspruch 13, wobei das Rundsenden eine Bluetooth-Technologie verwendet.

## Revendications

1. Procédé comprenant :
la diffusion (402), par un dispositif d'automatisation industrielle, en utilisant une technologie sans fil,
d'informations d'état du dispositif d'automatisation industrielle, les informations d'état comprenant des valeurs d'un ensemble prédéfini de données d'état ;
l'établissement (407), en utilisant la technologie sans fil, d'une connexion à un appareil utilisateur pour la communication entre le dispositif d'automatisation industrielle et l'appareil utilisateur ;
la poursuite, tant que la connexion existe, de la diffusion (410) des informations d'état de manière entrelacée, dans lequel les informations d'état sont diffusées pendant les temps morts de la communication à tous les dispositifs à portée de diffusion, la totalité desdits dispositifs incluant l'appareil utilisateur ;
la réception (408), en provenance de l'appareil utilisateur pendant la communication par l'intermédiaire de la connexion, d'une ou plusieurs mises à jour de l'ensemble prédéfini de données d'état, dans lequel lesdites une ou plusieurs mises à jour n'entrent pas en collision avec la diffusion qui se produit pendant les temps morts de la communication ;
la mise à jour de l'ensemble prédéfini de données d'état de manière correspondante ; et
la diffusion (410) en utilisant l'ensemble prédéfini mis à jour de données d'état.

2. Procédé selon la revendication 1, dans lequel la technologie sans fil est une technologie sans fil à courte portée.

3. Procédé selon la revendication 1 ou 2, comprenant en outre le cryptage (302), par le dispositif d'automatisation industrielle, des informations d'état avant diffusion.

4. Procédé comprenant :
la réception (502), dans un appareil utilisateur à portée de diffusion d'un dispositif d'automatisation industrielle, en provenance du dispositif d'automatisation industrielle, d'une diffusion sans fil comprenant des données d'état ;
l'affichage (503), par l'appareil utilisateur, des données d'état reçues ;
l'établissement (608), en utilisant la technologie sans fil, par l'appareil utilisateur, d'une connexion au dispositif d'automatisation industrielle pour la communication entre le dispositif d'automatisation industrielle et l'appareil utilisateur ;
l'envoi (609), pendant la communication par l'intermédiaire de la connexion de l'appareil utilisateur au dispositif d'automatisation industrielle, d'une ou
plusieurs mises à jour de l'ensemble prédéfini de données d'état, dans lequel lesdites une ou plusieurs mises à jour n'entrent pas en collision avec la diffusion qui se produit pendant les temps morts de la communication ;
la réception (505), tant que la connexion existe, par l'appareil utilisateur, pendant les temps morts de la communication en provenance du dispositif d'automatisation industrielle, d'informations d'état en diffusion sans fil, dans lequel les informations d'état sont diffusées pendant les temps morts de la communication à tous les dispositifs à portée de diffusion du dispositif d'automatisation industrielle.

5. Procédé selon la revendication 4, comprenant en outre, si les données d'état sont cryptées, le décryptage (605) des données d'état reçues avant leur affichage.

6. Procédé selon la revendication 4 ou 5, dans lequel la diffusion sans fil est reçue par l'intermédiaire d'une technologie sans fil à courte portée.

7. Procédé selon la revendication 4 ou 6, comprenant en outre :
la lecture (601), par l'appareil utilisateur, d'un script contenant des informations destinées à surveiller un dispositif d'automatisation industrielle ;
le démarrage (602), en réponse à la lecture, de la réception et de l'affichage.

8. Procédé selon l'une quelconque des revendications précédentes, dans lequel le dispositif d'automatisation industrielle est un équipement électronique utilisé pour commander un ou plusieurs processus industriels ayant un ou plusieurs dispositifs aval.

9. Produit de programme informatique comprenant des instructions de programme, qui, lorsqu'il est exécuté sur un appareil informatique, amène l'appareil informatique à mettre en œuvre un procédé selon l'une quelconque des revendications 1 à 7.

10. Dispositif d'automatisation industrielle (110, 110') comprenant des moyens destinés à mettre en œuvre un procédé selon l'une quelconque des revendications 1 à 3.

11. Dispositif d'automatisation industrielle (110, 110') selon la revendication 10, dans lequel le dispositif d'automatisation industrielle est un équipement électronique destiné à commander un ou plusieurs processus industriels ayant un ou plusieurs dispositifs aval.

12. Appareil utilisateur (120) comprenant des moyens destinés à mettre en œuvre un procédé selon l'une quelconque des revendications 4 à 7.

13. Système (100) comprenant au moins :
un ou plusieurs dispositifs d'automatisation industrielle (110, 110') selon la revendication 10 ou 11 ; et
un ou plusieurs appareils utilisateurs (120) selon la revendication 12.

14. Système (100) selon la revendication 13, dans lequel la diffusion utilise une technologie Bluetooth.
